# EUROPEAN PATENT SPECIFICATION

(11) **EP 3 503 614 B1**
(45) Date of publication and mention of the grant of the patent: **08.06.2022**
(21) Application number: 17210245.1
(22) Date of filing: 22.12.2017
(51) Int. Cl.: H04W 24/02

(54) **DEVICES AND METHODS FOR MONITORING AND HANDLING FAULTS IN A NETWORK SLICE OF A COMMUNICATION NETWORK**
VORRICHTUNGEN UND VERFAHREN ZUR ÜBERWACHUNG UND HANDHABUNG VON FEHLERN IN EINEM NETZWERKSEGMENT EINES KOMMUNIKATIONSNETZWERKS
DISPOSITIFS ET PROCÉDÉS DE SURVEILLANCE ET DE GESTION DE PANNES DANS UNE TRANCHE DE RÉSEAU D'UN RÉSEAU DE COMMUNICATION

(43) Date of publication of application: 26.06.2019
(73) Proprietor: Deutsche Telekom AG, 53113 Bonn (DE)
(72) Inventor: Klotz, Michael, 01109 Dresden (DE)
(74) Representative: Vossius & Partner Patentanwälte Rechtsanwälte mbB

(56) References cited:
- EP-A1- 3 024 174
- WO-A1-2012/062373
- "3rd Generation Partnership Project; Technical Specification Group Services and System Aspects; Telecommunication management; Study on network management of virtualized networks (Release 13)", 3GPP STANDARD; 32842-040, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 3 March 2015 (2015-03-03), XP050945482, Retrieved from the Internet: URL:http://www.3gpp.org/ftp/Specs/archive/ 32_series/32.842/ [retrieved on 2015-03-03]
- Anonymous: "3rd Generation Partnership Project; Technical Specification Group Services and System Aspects; Telecommunication management; Study on management and orchestration of network slicing for next generation network (Release 15)", 3GPP TR 28.801 V15.0.0, 1 September 2017 (2017-09-01), pages 1-78, XP055589022, Retrieved from the Internet: URL:https://portal.3gpp.org/desktopmodules /Specifications/SpecificationDetails.aspx? specificationId=3091 [retrieved on 2019-05-15]

## Description

### TECHNICAL FIELD

In general, the present invention relates to communication networks, in particular mobile communication networks. More specifically, the present invention relates to monitoring and handling faults in a network slice of a mobile communication network, as well as a corresponding method and a corresponding mobile communication network.

### BACKGROUND

In current mobile communication networks, i.e. 4G LTE systems, the core network generally has a static architecture. Control plane network functions and data plane (also referred to as user plane) network functions are provided by the fixed network elements of the core network, such as a Mobility Management Entity (MME), a Serving Gateway (SGW), a PDN Gateway (PGW) and the like. These network elements handle all the network traffic that passes through the Evolved Packet Core (EPC) regardless of the type of services associated with the network traffic.

In comparison to 4G mobile communication systems, the future 5th Generation mobile technology (5G) will support use cases with an enormous variety of performance attributes, for instance, ultra-reliable and/or ultra-low latency communication for mission critical services, eHealth, public safety, real-time vehicle control, tactile Internet, connectivity for drones, and the like. To support services with such a diverse range of requirements, network slices and logical network functions are expected to be among the key building blocks of 5G networks

Generally, a network slice is implemented on the physical network resources, i.e. the physical infrastructure of a mobile communication network, such as servers, routers, base stations and the like and often comprises a collection of logical network functions that support the communication services for particular use cases. These logical network functions are often implemented in a control plane of a network slice and can be considered to run on one or more virtual machines being part the network slice. The virtual machines, in turn, are implemented on the physical network resources of the mobile communication network.

In contrast to traditional core networks, which have been designed as a single network architecture supporting a maximum level of connectivity and providing multiple services, network slicing allows networks to be logically separated with each network slice providing customized connectivity, and all network slices can share the same or similar functional components. Network slicing thus significantly increases flexibility and dynamicity of the core network and allows, for instance, implementing an access-agnostic core. Thus, network slicing will be one of the main features for 5G developments and enable provision of service- and customer-tailored network functions, aiming especially at vertical integration of industries.

As already mentioned above, the network functions implemented in a network slice of a mobile communication network can have different tasks, such as Authentication, Authority & Accounting (AAA) management, mobility management, session management, security management, and the like. Often a service provided by a mobile communication network can involve the interaction of different network functions of a network slice. Thus, for a service to function properly the one or more network functions of the network slice providing the service must function properly themselves.

In light of the above, there is a need for devices and methods providing an improved monitoring and handling of errors in a network slice of a communication network, in particular a 5G mobile communication network.

WO2012/062373 relates to self-organizing networks (SONs), in particular self-healing networks. More specifically, a method of managing the operation of a network element in a communications system is disclosed. The method comprises: receiving performance indicators by an optimizing function; combining together the performance indicators to produce an achievement indicator comprising weighted components of the performance indicators; using the achievement indicator to determine an optimum setting of at least one parameter value related to operation of the network element; applying the parameter value to the network element.

EP3024174 relates to error reporting network function virtualization (NFV) environments. More specifically, a fault management method is disclosed comprising the following steps: acquiring first fault information, including a faulty entity identifier and a fault type, of a network functions virtualization infrastructure NFVI entity, where the first fault information is used to indicate that a fault occurs in a first NFVI entity having the faulty entity identifier; generating first comprehensive fault information according to the first fault information, where the first comprehensive fault information comprises the first fault information and correlated fault information of the first fault information; and performing fault repair or reporting processing according to the first comprehensive fault information. In embodiments of the present invention, fault information of a hardware and/or software entity is acquired, to perform comprehensive processing on correlated pieces of fault information, which can implement fault reporting and processing in an NFV environment.

Anonymous: "3rd Generation Partnership Project; Technical Specification Group Services and System Aspects; Telecommunication management; Study on management and orchestration of network slicing for next generation network (Release 15)", 3 GPP TR 28.801 V15.0.0, 1 September 2017, pages 1-78, is the standard of 3GPP related to network slicing for the next generation network which consists of 3 layers: 1) Service Instance Layer, 2) Network Slice Instance Layer, and 3) Resource layer where each layer requires management functions (with reference to 3GPP TR 23.799).

### SUMMARY

The invention is specified by the independent claims. Preferred embodiments are defined in the dependent claims.

It is an object of the invention to provide devices and methods providing an improved monitoring and handling of errors in a network slice of a communication network, in particular a 5G mobile communication network.

The foregoing and other objects are achieved by the subject matter of the independent claims. Further implementation forms are apparent from the dependent claims, the description and the figures.

According to a first aspect the invention relates to a network slice of a mobile communication network. The network slice comprises: a local error handling entity; a first network element comprising a first error monitoring function, wherein the first error monitoring function has a monitoring mode and a repair mode, wherein in the monitoring mode the first error monitoring function is configured to determine a first communication parameter of the first network element and to provide the first communication parameter to the local error handling entity and wherein in the repair mode the first error monitoring function is configured to switch the first network element into a predefined state; and a second network element comprising a second error monitoring function, wherein the second error monitoring function has a monitoring mode and a repair mode, wherein in the monitoring mode the second error monitoring function is configured to determine a second communication parameter of the second network element and to provide the second communication parameter to the local error handling entity and wherein in the repair mode the second error monitoring function is configured to switch the second network element into a predefined state. The local error handling entity is configured to check a first error condition based on the first communication parameter and at least one first reference parameter and, in the event of a first error, switch the first error monitoring function into the repair mode and the local error handling entity is configured to check a second error condition based on the second communication parameter and at least one second reference parameter and, in the event of a second error, switch the second error monitoring function into the repair mode. The local error handling entity is further configured to report an error to a global error handling entity of the communication network, in case the first network element and/or the second network element cannot be switched into the predefined state.

Thus, the present invention allows for an improved monitoring and handling of errors in a network slice of a mobile communication network. As used herein, an "error" or more specifically an "error condition" has to be construed broadly and, thus, can mean the simple divergence between a current value of a communication parameter and a desired value (or a rage of desired values) of the communication parameter.

In a further embodiment of the first aspect, the local error handling entity is configured to check the first error condition based on the first communication parameter and the at least one first reference parameter by comparing the first communication parameter with the at least one first reference parameter and/or the local error handling entity is configured to check the second error condition based on the second communication parameter and the at least one second reference parameter by comparing the second communication parameter with the at least one second reference parameter.

In a further embodiment of the first aspect, the local error handling entity is configured to switch the first error monitoring function into the repair mode, in case the first communication parameter differs from the at least one first reference parameter, and/or the local error handling entity is configured to switch the second error monitoring function into the repair mode, in case the second communication parameter differs from the at least one second reference parameter.

In a further embodiment of the first aspect, the predefined state is an idle state or a default state.

In a further embodiment of the first aspect, the first network element of the network slice is a first network function of the network slice and/or the second network element of the network slice is a second network function of the network slice.

In a further embodiment of the first aspect, the local error handling entity is further configured, in the event of a first error, to implement a further instance of the first network function in the network slice and/or, in the event of a second error, to implement a further instance of the second network function in the network slice.

Advantageously, the further instance of the first and/or second network function can take over the tasks of the original instances of the first and/or second network function.

In a further embodiment of the first aspect, the local error handling entity is further configured to receive the at least one first reference parameter and/or the at least one second reference parameter from the global error handling entity.

Advantageously, this allows to have a centralized control of the performance and/or anomalies of different network slices in a mobile communication network.

In a further embodiment of the first aspect, the local error handling entity, the first network element and/or the second network element is implemented as a virtual network function of the network slice.

In a further embodiment of the first aspect, the first communication parameter relates to a data throughput of the first network element and/or the second communication parameter relates to a data throughput of the second network element.

According to an aspect not part of the invention, there is provided a network orchestrator for a communication network, in particular a mobile communication network, wherein the network orchestrator is configured to implement the network slice according to the first aspect in the communication network.

According to an aspect not part of the invention, there is provided a communication network, in particular a mobile communication network comprising one or more network orchestrators according to the above aspect and one or more network slices according to the first aspect. According to a second aspect the invention relates to a method of operating a network slice in a communication network, in particular a mobile communication network, wherein the network slice comprises a local error handling entity, a first network element comprising a first error monitoring function having a monitoring mode and a repair mode and a second network element comprising a second error monitoring function having a monitoring mode and a repair mode. The method comprises the steps of: in the monitoring mode of the first error monitoring function, determining a first communication parameter of the first network element and providing the first communication parameter to the local error handling entity; in the monitoring mode of the second error monitoring function, determining a second communication parameter of the second network element and providing the second communication parameter to the local error handling entity; checking a first error condition based on the first communication parameter and at least one first reference parameter and, in the event of a first error, switching the first error monitoring function into the repair mode, wherein in the repair mode the first error monitoring function is configured to switch the first network element into a predefined state; and checking a second error condition based on the second communication parameter and at least one second reference parameter and, in the event of a second error, switching the second error monitoring function into the repair mode, wherein in the repair mode the second error monitoring function is configured to switch the second network element into a predefined state.

According to an aspect not part of the invention, there is provided a computer program product comprising program code for performing the method of the above non-claimed aspect when executed on a computer.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a network slice of a communication network in form of a network slice according to an embodiment;
Fig. 2 shows a schematic diagram illustrating a communication network according to an embodiment including two network slices according to an embodiment; and
Fig. 3 shows a flow diagram illustrating a method of operating a network slice according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

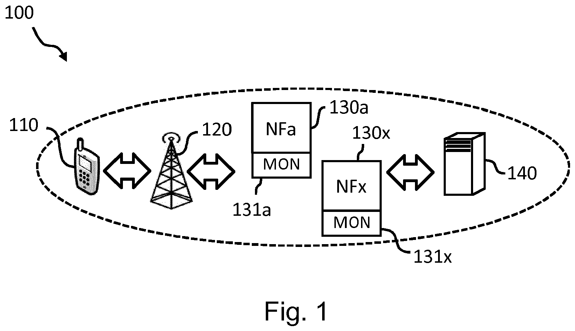

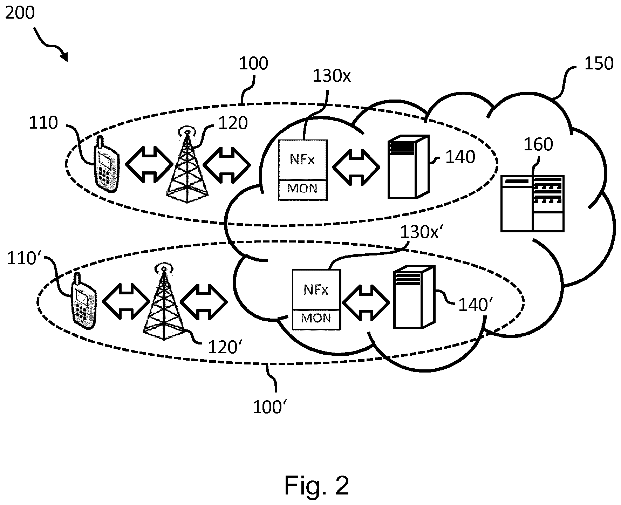

Figure 1 shows a schematic diagram illustrating a network slice 100 of a communication network in form of a network slice 100 according to an embodiment. As will be described in more detail further below in the context of figure 2, the communication network 200 can be a mobile communication network, in particular a mobile communication network 200 according to the standard 5G or a standard based thereon supporting network slices, such as the network slice 100.

As illustrated in figure 1, the network slice 100 can be considered to provide a virtual end-to- end network, which, in an embodiment, can comprise, for instance, one or more user equipments 110 and one or more base stations 120 being part of a radio access network (RAN) of the communication network 200.

As shown in figure 1, the network slice 100 comprises a first network element 130a and a second network element 130x, which can be configured to provide a specific service, such as data communication. In an embodiment, the first network element 130a and/or the second network element 130x can be implemented as virtual or logical network functions 130a, 130x providing different services, such as Authentication, Authority & Accounting (AAA) management services, mobility management services, session management services, security management services, and the like. In another embodiment, first network element 130a and/or the second network element 130x can be implemented as physical devices, such as routers, servers and the like.

The first network element 130a comprises a first error monitoring function 131a, which can operate in a monitoring mode and a repair mode. In the monitoring mode the first error monitoring function 131a is configured to determine a first communication parameter of the first network element 130a and to provide the first communication parameter to a local error handling entity 140 being part of the network slice 100. In the repair mode the first error monitoring function 131a is configured to switch the first network element 130a into a predefined state. The first communication parameter can relate, for instance, to a data throughput of the first network element 130a.

Likewise, the second network element 130x comprises a second error monitoring function 131x, which, like the first error monitoring function 131a of the first network element 130a, can operate in a monitoring mode and a repair mode. In the monitoring mode the second error monitoring function 131x is configured to determine a second communication parameter of the second network element 130x and to provide the second communication parameter to the local error handling entity 140. In the repair mode the second error monitoring function 131x is configured to switch the second network element 130x into a predefined state.

The local error handling entity 140, which according to an embodiment can also be implemented in the form of a logical network function, is configured to check a first error condition based on the first communication parameter and at least one first reference parameter and, in the event of a first error, switch the first error monitoring function 131a into the repair mode. Likewise the local error handling entity 140 is configured to check a second error condition based on the second communication parameter and at least one second reference parameter and, in the event of a second error, switch the second error monitoring function 131x into the repair mode. As already described above, doing so, will trigger the switch of the first network element 130a and/or the second network element 130x into the predefined state. In an embodiment, the predefined state can be an idle state or a default state of the first network element 130a and/or the second network element 130x.

In an embodiment, where the first network element 130a and/or the second network element 130x are implemented as network functions, the local error handling entity 140 can be further configured, in the event of a first error, to implement a further instance of the first network function 130a in the network slice 100 and/or, in the event of a second error, to implement a further instance of the second network function 130x in the network slice 100. In this way, the further instances of the first and/or second network function can take over the tasks of the original instances thereof.

In an embodiment, the local error handling entity 140 is configured to check the first error condition based on the first communication parameter and the at least one first reference parameter by comparing the first communication parameter with the at least one first reference parameter. Likewise, in an embodiment, the local error handling entity 140 is configured to check the second error condition based on the second communication parameter and the at least one second reference parameter by comparing the second communication parameter with the at least one second reference parameter.

In an embodiment, the local error handling entity 140 is configured to switch the first error monitoring function 131a into the repair mode, in case the first communication parameter differs from the at least one first reference parameter. Likewise, in an embodiment, the local error handling entity 140 is configured to switch the second error monitoring function 131x into the repair mode, in case the second communication parameter differs from the at least one second reference parameter.

Figure 2 shows a schematic diagram illustrating a mobile communication network 200 according to an embodiment including the network slice 100 of figure 1 as well as a further network slice 100' according to an embodiment. In an embodiment, the further network slice 100' can be implemented identical or at least similar to the network slice 100, i.e. comprising one or more user equipments 110', one or more base stations 120', a plurality of network elements 130x' and a local error handling entity 140'. To this end, the mobile communication network 200 can comprise one or more network orchestrators (not shown in figure 2) configured to implement and operate the network slices 100, 100' in the mobile communication network 200.

In the embodiment illustrated in figure 2 the mobile communication network 200 further comprises a global error handling entity 160, which can be located in a core network 150 of the mobile communication network 200. In an embodiment, the local error handling entity 140 of the network slice 100 is further configured to report an error to the global error handling entity 160 of the mobile communication network 200, in case the first network element 130a and/or the second network element 130x cannot be switched into the predefined state. In an embodiment, the local error handling entity 140 of the network slice is further configured to receive the at least one first reference parameter and/or the at least one second reference parameter from the global error handling entity 160.

As already mentioned above, in an embodiment the communication network 200 shown in figure 2 is a mobile communication network according to the 5G standard or a standard based thereon. The network architecture for supporting embodiments of the invention, such as the architecture of the communication network 200 shown in figure 2, may be either realized according to Network Function Virtualization (NFV) and Software Defined Networks (SDN) paradigms or may rely on dedicated hardware appliances or entities. As already mentioned above, the network slices 100, 100' and/or the plurality of network entities/functions 130x, 130x' may be built upon virtual and/or physical infrastructures, including wireless Access Points (APs), Data Centers, Edge Data Centers or Points of Presence, interconnected by a transport network realized either by legacy connectivity methods or by virtual links, virtual switches and virtual routers controlled by SDN controllers.

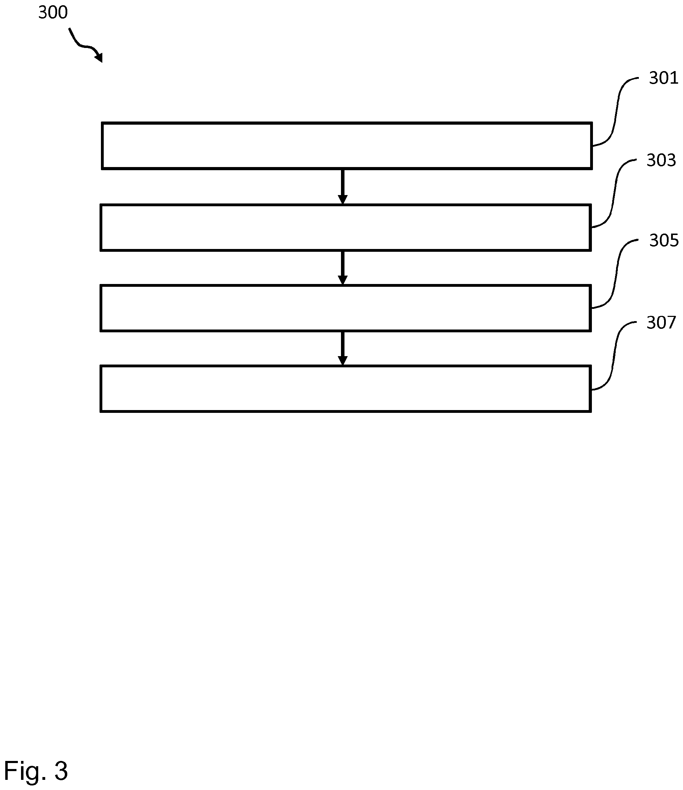

Figure 3 schematically illustrates a flow diagram of a corresponding method 300 of operating the network slice 100 in the communication network 200 according to an embodiment. The method 300 comprises the steps of: in the monitoring mode of the first error monitoring function, determining 301 a first communication parameter of the first network element 130a and providing the first communication parameter to the local error handling entity 140; in the monitoring mode of the second error monitoring function 131x, determining 303 a second communication parameter of the second network element 130x and providing the second communication parameter to the local error handling entity 140; checking 305 a first error condition based on the first communication parameter and at least one first reference parameter and, in the event of a first error, switching the first error monitoring function 131a into the repair mode, wherein in the repair mode the first error monitoring function 131a is configured to switch the first network element 130a into a predefined state; and checking 307 a second error condition based on the second communication parameter and at least one second reference parameter and, in the event of a second error, switching the second error monitoring function 131x into the repair mode, wherein in the repair mode the second error monitoring function 131x is configured to switch the second network element 130x into a predefined state.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention as defined by the appended claims.

## Claims

1. Network slice (100) of a mobile communication network (200), the network slice (100) comprising:
a local error handling entity (140);
a first network element (130a) comprising a first error monitoring function (131a), wherein the first error monitoring function (131a) has a monitoring mode and a repair mode, wherein in the monitoring mode the first error monitoring function (131a) is configured to determine a first communication parameter of the first network element (130a) and to provide the first communication parameter to the local error handling entity (140) and wherein in the repair mode the first error monitoring function (131a) is configured to switch the first network element (130a) into a predefined state; and
a second network element (130x) comprising a second error monitoring function (131 x), wherein the second error monitoring function (131x) has a monitoring mode and a repair mode, wherein in the monitoring mode the second error monitoring function (131x) is configured to determine a second communication parameter of the second network element (130x) and to provide the second communication parameter to the local error handling entity (140) and wherein in the repair mode the second error monitoring function (131x) is configured to switch the second network element (130x) into a predefined state;
wherein the local error handling entity (140) is configured to check a first error condition based on the first communication parameter and at least one first reference parameter and, in the event of a first error, switch the first error monitoring function (131a) into the repair mode and wherein the local error handling entity (140) is configured to check a second error condition based on the second communication parameter and at least one second reference parameter and, in the event of a second error, switch the second error monitoring function (131x) into the repair mode,
wherein the local error handling entity (140) is further configured to report an error to a global error handling entity (160) of the communication network (200), in case the first network element (130a) and/or the second network element (130x) cannot be switched into the predefined state.

2. The network slice (100) of claim 1, wherein the local error handling entity (140) is configured to check the first error condition based on the first communication parameter and the at least one first reference parameter by comparing the first communication parameter with the at least one first reference parameter and/or wherein the local error handling entity (140) is configured to check the second error condition based on the second communication parameter and the at least one second reference parameter by comparing the second communication parameter with the at least one second reference parameter.

3. The network slice (100) of claim 2, wherein the local error handling entity (140) is configured to switch the first error monitoring function (131a) into the repair mode, in case the first communication parameter differs from the at least one first reference parameter, and wherein the local error handling entity (140) is configured to switch the second error monitoring function (131x) into the repair mode, in case the second communication parameter differs from the at least one second reference parameter.

4. The network slice (100) of any one of the preceding claims, wherein the predefined state is an idle state or a default state.

5. The network slice (100) of any one of the preceding claims, wherein the first network element (130a) of the network slice (100) is a first network function (130a) of the network slice (100) and/or wherein the second network element (130x) of the network slice (100) is a second network function (130a) of the network slice (100).

6. The network slice (100) of claim 5, wherein the local error handling entity (140) is further configured, in the event of a first error, to implement a further instance of the first network function (130a) in the network slice (100) and/or, in the event of a second error, to implement a further instance of the second network function (130x) in the network slice (100).

7. The network slice (100) of any one of the preceding claims, wherein the local error handling entity (140) is further configured to receive the at least one first reference parameter and/or the at least one second reference parameter from the global error handling entity (160).

8. The network slice (100) of any one of the preceding claims, wherein the local error handling entity (140), the first network element (130a) and/or the second network element (130x) is implemented as a virtual network function of the network slice (100).

9. The network slice (100) of any one of the preceding claims, wherein the first communication parameter relates to a data throughput of the first network element (130a) and/or wherein the second communication parameter relates to a data throughput of the second network element (130x).

10. A mobile communication network (200), comprising at least one network slice (100) according to any one of claims 1 to 9 and at least one user equipment (110).

11. A method (300) of operating a network slice (100) in a mobile communication network (200), the network slice (100) comprising a local error handling entity (140), a first network element (130a) comprising a first error monitoring function (131a) having a monitoring mode and a repair mode and a second network element (130x) comprising a second error monitoring function (131x) having a monitoring mode and a repair mode, wherein the method (300) comprises:
in the monitoring mode of the first error monitoring function (131a), determining (301) a first communication parameter of the first network element (130a) and providing the first communication parameter to the local error handling entity (140);
in the monitoring mode of the second error monitoring function (131x), determining (303) a second communication parameter of the second network element (130x) and providing the second communication parameter to the local error handling entity (140);
checking (305) a first error condition based on the first communication parameter and at least one first reference parameter and, in the event of a first error, switching the first error monitoring function (131a) into the repair mode, wherein in the repair mode the first error monitoring function (131a) is configured to switch the first network element (130a) into a predefined state; and
checking (307) a second error condition based on the second communication parameter and at least one second reference parameter and, in the event of a second error, switching the second error monitoring function (131x) into the repair mode, wherein in the repair mode the second error monitoring function (131x) is configured to switch the second network element (130x) into a predefined state,
wherein the local error handling entity (140) is further configured to report an error to a global 5 error handling entity (160) of the communication network (200), in case the first network element (130a) and/or the second network element (130x) cannot be switched into the predefined state.

## Patentansprüche

1. Netzwerksegment (100) eines mobilen Kommunikationsnetzwerks (200), wobei das Netzwerksegment (100) aufweist:
eine lokale Einheit zur Handhabung von Fehlern (140);
ein erstes Netzwerkelement (130a), welches eine erste Funktion zum Überwachen von Fehlern (131a) aufweist, wobei die erste Funktion zum Überwachen von Fehlern (131a) einen Überwachungsmodus und einen Repariermodus aufweist, wobei die erste Funktion zum Überwachen von Fehlern (131a) im Überwachungsmodus konfiguriert ist, einen ersten Kommunikationsparameter des ersten Netzwerkelements (130a) zu bestimmen und den ersten Kommunikationsparameter der lokalen Einheit zur Handhabung von Fehlern (140) bereitzustellen, und wobei die erste Funktion zum Überwachen von Fehlern (131a) im Repariermodus konfiguriert ist, das erste Netzwerkelement (130a) in einen vorbestimmten Zustand umzuschalten; und
ein zweites Netzwerkelement (130x), welches eine zweite Funktion zum Überwachen von Fehlern (131x) aufweist, wobei die zweite Funktion zum Überwachen von Fehlern (131x) einen Überwachungsmodus und einen Repariermodus aufweist, wobei die zweite Funktion zum Überwachen von Fehlern (131x) im Überwachungsmodus konfiguriert ist, einen zweiten Kommunikationsparameter des zweiten Netzwerkelements (130x) zu bestimmen und den zweiten Kommunikationsparameter der lokalen Einheit zur Handhabung von Fehlern (140) bereitzustellen und wobei die zweite Funktion zum Überwachen von Fehlern (131x) im Repariermodus konfiguriert ist, das zweite Netzwerkelement (130x) in einen vorbestimmten Zustand umzuschalten;
wobei die lokale Einheit zur Handhabung von Fehlern (140) konfiguriert ist, einen ersten Fehlerzustand auf Grundlage des ersten Kommunikationsparameters und zumindest eines ersten Referenzparameters zu überprüfen und, im Falle eines ersten Fehlers, die erste Funktion zum Überwachen von Fehlern (131a) in den Repariermodus umzuschalten, und wobei die lokale Einheit zur Handhabung von Fehlern (140) konfiguriert ist, eine zweite Fehlerbedingung auf Grundlage des zweiten Kommunikationsparameters und zumindest eines zweiten Referenzparameters zu überprüfen und, im Falle eines zweiten Fehlers, die zweite Funktion zum Überwachen von Fehlern (131x) in den Repariermodus umzuschalten,
wobei die lokale Einheit zur Handhabung von Fehlern (140) ferner konfiguriert ist, einen Fehler einer globalen Einheit zur Handhabung von Fehlern (160) des Kommunikationsnetzwerks (200) zu melden, in dem Fall, dass das erste Netzwerkelement (130a) und/oder das zweite Netzwerkelement (130x) nicht in den vorbestimmten Zustand umgeschaltet werden können.

2. Netzwerksegment (100) nach Anspruch 1, wobei die lokale Einheit zur Handhabung von Fehlern (140) konfiguriert ist, die erste Fehlerbedingung auf Grundlage des ersten Kommunikationsparameters und des zumindest einen Referenzparameters zu überprüfen, indem sie den ersten Kommunikationsparameter mit dem zumindest einen Referenzparameter vergleicht und/oder wobei die lokale Einheit zur Handhabung von Fehlern (140) konfiguriert ist, die zweite Fehlerbedingung auf Grundlage des zweiten Kommunikationsparameters und des zumindest einen Referenzparameters zu überprüfen, indem sie den zweiten Kommunikationsparameter mit dem zumindest einen Referenzparameter vergleicht.

3. Netzwerksegment (100) nach Anspruch 2, wobei die lokale Einheit zur Handhabung von Fehlern (140) konfiguriert ist, die erste Funktion zum Überwachen von Fehlern (131a) in den Repariermodus umzuschalten, in dem Fall, wenn der erste Kommunikationsparameter sich von dem zumindest einen ersten Referenzparameter unterscheidet, und wobei die lokale Einheit zur Handhabung von Fehlern (140) konfiguriert ist, die zweite Funktion zum Überwachen von Fehlern (131x) in den Repariermodus umzuschalten, in dem Fall, wenn der zweite Kommunikationsparameter sich von dem zumindest einen zweiten Referenzparameter unterscheidet.

4. Netzwerksegment (100) nach einem der vorhergehenden Ansprüche, wobei der vorbestimmte Zustand ein inaktiver Zustand oder ein Standardzustand ist.

5. Netzwerksegment (100) nach einem der vorhergehenden Ansprüche, wobei das erste Netzwerkelement (130a) des Netzwerksegments (100) eine erste Netzwerkfunktion (130a) des Netzwerksegments (100) ist und/oder wobei das zweite Netzwerkelement (130x) des Netzwerksegments (100) eine zweite Netzwerkfunktion (130a) des Netzwerksegments (100) ist.

6. Netzwerksegment (100) nach Anspruch 5, wobei die lokale Einheit zur Handhabung von Fehlern (140) ferner konfiguriert ist, im Falle eines ersten Fehlers eine weitere Instanz der ersten Netzwerkfunktion (130a) in dem Netzwerksegment (100) zu implementieren und/oder im Falle eines zweiten Fehlers eine weitere Instanz der zweiten Netzwerkfunktion (130x) in dem Netzwerksegment (100) zu implementieren.

7. Netzwerksegment (100) nach einem der vorhergehenden Ansprüche, wobei die lokale Einheit zur Handhabung von Fehlern (140) ferner konfiguriert ist, zumindest den einen ersten Referenzparameter und/oder den einen zweiten Referenzparameter von der globalen Einheit zur Handhabung von Fehlern (160) zu erhalten.

8. Netzwerksegment (100) nach einem der vorhergehenden Ansprüche, wobei die lokale Einheit zur Handhabung von Fehlern (140), das erste Netzwerkelement (130a) und/oder das zweite Netzwerkelement (130x) als eine virtuelle Netzfunktion des Netzwerksegments (100) implementiert ist.

9. Netzwerksegment (100) nach einem der vorhergehenden Ansprüche, wobei der erste Kommunikationsparameter sich auf einen Datendurchsatz des ersten Netzwerkelements (130a) bezieht und/oder wobei der zweite Kommunikationsparameter sich auf einen Datendurchsatz des zweiten Netzwerkelements (130x) bezieht.

10. Mobiles Kommunikationsnetzwerk (200), aufweisend zumindest ein Netzwerksegment (100) nach einem der Ansprüche 1 bis 9 und zumindest ein Benutzergerät (110).

11. Verfahren (300) zum Betreiben eines Netzwerksegments (100) in einem mobilen Kommunikationsnetzwerk (200), wobei das Netzwerksegment (100) eine lokale Einheit zum Beheben von Fehlern (140), ein erstes Netzwerkelement (130a), welches eine erste Funktion zum Überwachen von Fehlern (131a) aufweist, welche einen Überwachungsmodus und einen Repariermodus aufweist, und ein zweites Netzwerkelement (130x), mit einer zweiten Funktion zum Überwachen von Fehlern (131x) aufweist, welche einen Überwachungsmodus und einen Repariermodus aufweist, wobei das Verfahren umfasst:
in dem Überwachungsmodus der ersten Funktion zum Überwachen von Fehlern (131a) das Erkennen (301) eines ersten Kommunikationsparameters des ersten Netzwerkelements (130a) und das Bereitstellen des ersten Kommunikationsparameters an die lokale Einheit zur Handhabung von Fehlern (140);
in dem Überwachungsmodus der zweiten Funktion zum Überwachen von Fehlern (131x) das Erkennen (303) eines zweiten Kommunikationsparameters des zweiten Netzwerkelements (130x) und das Bereitstellen des zweiten Kommunikationsparameters an die lokale Einheit zur Handhabung von Fehlern (140);
Überprüfen (305) einer ersten Fehlerbedingung auf Grundlage des ersten Kommunikationsparameters und zumindest eines ersten Referenzparameters und, im Falle eines ersten Fehlers, das Umschalten der ersten Funktion zum Überwachen von Fehlern (131a) in den Repariermodus, wobei die erste Funktion zum Überwachen von Fehlern (131a) im Repariermodus konfiguriert ist, das erste Netzwerkelement (130a) in einen vorbestimmten Zustand umzuschalten;
Überprüfen (307) einer zweiten Fehlerbedingung auf Grundlage von dem zweiten Kommunikationsparameter und zumindest einem zweiten Referenzparameter und, im Falle eines zweiten Fehlers, das Umschalten der zweiten Funktion zum Überwachen von Fehlern (131x) in den Repariermodus, wobei die zweite Funktion zum Überwachen von Fehlern (131x) im Repariermodus konfiguriert ist, das zweite Netzwerkelement (130x) in einen vorbestimmten Zustand umzuschalten;
wobei die lokale Einheit zur Handhabung von Fehlern (140) ferner konfiguriert ist, einen Fehler einer globalen Einheit zur Handhabung von Fehlern (160) des Kommunikationsnetzwerks (200) zu melden, in dem Fall, dass das erste Netzwerkelement (130a) und/oder das zweite Netzwerkelement (130x) nicht in den vorbestimmten Zustand umgeschaltet werden können.

## Revendications

1. Tranche (100) de réseau d'un réseau de communications mobiles (200), la tranche (100) de réseau comprenant :
une entité locale de traitement d'erreurs (140) ;
un premier élément (130a) de réseau comprenant une première fonction de surveillance d'erreurs (131a), la première fonction de surveillance d'erreurs (131a) comportant un mode de surveillance et un mode de réparation, où, en mode de surveillance, la première fonction de surveillance d'erreurs (131a) est configurée pour déterminer un premier paramètre de communication du premier élément (130a) de réseau et pour fournir le premier paramètre de communication à l'entité locale de traitement d'erreurs (140), et où, en mode de réparation, la première fonction de surveillance d'erreurs (131a) est configurée pour commuter le premier élément (130a) de réseau vers un état prédéfini ; et
un second élément (130x) de réseau comprenant une seconde fonction de surveillance d'erreurs (131x), la seconde fonction de surveillance d'erreurs (131x) comportant un mode de surveillance et un mode de réparation, où, en mode de surveillance, la seconde fonction de surveillance d'erreurs (131x) est configurée pour déterminer un second paramètre de communication du second élément (130x) de réseau et pour fournir le second paramètre de communication à l'entité locale de traitement d'erreurs (140), et où, en mode de réparation, la seconde fonction de surveillance d'erreurs (131x) est configurée pour commuter le second élément (130x) de réseau vers un état prédéfini ;
l'entité locale de traitement d'erreurs (140) étant configurée pour vérifier une première condition d'erreur en fonction du premier paramètre de communication et d'au moins un premier paramètre de référence, et, dans l'éventualité d'une première erreur, pour commuter la première fonction de surveillance d'erreurs (131a) vers le mode de réparation, et l'entité locale de traitement d'erreurs (140) étant configurée pour vérifier une seconde condition d'erreur en fonction du second paramètre de communication et d'au moins un second paramètre de référence, et, dans l'éventualité d'une seconde erreur, pour commuter la seconde fonction de surveillance d'erreurs (131x) vers le mode de réparation,
l'entité locale de traitement d'erreurs (140) étant configurée en outre pour signaler une erreur à une entité globale de traitement d'erreurs (160) du réseau de communications (200), en cas où le premier élément (130a) de réseau et/ou le second élément (130x) de réseau ne peuvent pas être commutés vers l'état prédéfini.

2. La tranche (100) de réseau de la revendication 1, dans laquelle l'entité locale de traitement d'erreurs (140) est configurée pour vérifier la première condition d'erreur en fonction du premier paramètre de communication et l'au moins un premier paramètre de référence, au moyen de la comparaison du premier paramètre de communication avec l'au moins un premier paramètre de référence, et/ou dans laquelle l'entité locale de traitement d'erreurs (140) est configurée pour vérifier la seconde condition d'erreur en fonction du second paramètre de communication et l'au moins un second paramètre de référence, au moyen de la comparaison du second paramètre de communication avec l'au moins un second paramètre de référence.

3. La tranche (100) de réseau de la revendication 2, dans laquelle l'entité locale de traitement d'erreurs (140) est configurée pour commuter la première fonction de surveillance d'erreurs (131a) vers le mode de réparation en cas où le premier paramètre de communication diffère de l'au moins un premier paramètre de référence, et dans laquelle l'entité locale de traitement d'erreurs (140) est configurée pour commuter la seconde fonction de surveillance d'erreurs (131x) vers le mode de réparation, en cas où le second paramètre de communication diffère de l'au moins un second paramètre de référence.

4. La tranche (100) de réseau de l'une quelconque des revendications précédentes, dans laquelle l'état prédéfini est un état au repos ou un état par défault.

5. La tranche (100) de réseau de l'une quelconque des revendications précédentes, dans laquelle le premier élément (130a) de réseau de la tranche (100) de réseau est une première fonction (130a) de réseau de la tranche (100) de réseau, et/ou dans laquelle le second élément (130x) de réseau de la tranche (100) de réseau est une seconde fonction (130a) de réseau de la tranche (100) de réseau.

6. La tranche (100) de réseau de la revendication 5, dans laquelle l'entité locale de traitement d'erreurs (140) est configurée en outre, dans l'éventualité d'une première erreur, pour réaliser une instance supplémentaire de la première fonction (130a) de réseau dans la tranche (100) de réseau, et/ou, dans l'éventualité d'une seconde erreur, pour réaliser une instance supplémentaire de la seconde fonction (130x) de réseau dans la tranche (100) de réseau.

7. La tranche (100) de réseau de l'une quelconque des revendications précédentes, dans laquelle l'entité locale de traitement d'erreurs (140) est configurée en outre pour recevoir l'au moins un premier paramètre de référence et/ou l'au moins un second paramètre de référence à partir de l'entité globale de traitement d'erreurs (160).

8. La tranche (100) de réseau de l'une quelconque des revendications précédentes, dans laquelle l'entité locale de traitement d'erreurs (140), le premier élément (130a) de réseau et/ou le second élément (130x) de réseau sont réalisés en tant que fonction réseau virtuelle de la tranche (100) de réseau.

9. La tranche (100) de réseau de l'une quelconque des revendications précédentes, dans laquelle le premier paramètre de communication se rapporte à un débit de données du premier élément (130a) de réseau, et/ou dans laquelle le second paramètre de communication se rapporte à un débit de données du second élément (130x) de réseau.

10. Réseau de communications mobiles (200) comprenant au moins une tranche (100) de réseau selon l'une quelconque des revendications 1 à 9, et au moins un équipement d'utilisateur (110).

11. Procédé (300) de fonctionnement d'une tranche (100) de réseau dans un réseau de communications mobiles (200), la tranche (100) de réseau comprenant une entité locale de traitement d'erreurs (140), un premier élément (130a) de réseau comprenant une première fonction de surveillance d'erreurs (131a) comportant un mode de surveillance et un mode de réparation, et un second élément (130x) de réseau comprenant une seconde fonction de surveillance d'erreurs (131x) comportant un mode de surveillance et un mode de réparation, le procédé (300) comprenant :
en mode de surveillance de la première fonction de surveillance d'erreurs (131a), la détermination (301) d'un premier paramètre de communication du premier élément (130a) de réseau, et la fourniture du premier paramètre de communication à l'entité locale de traitement d'erreurs (140) ;
en mode de surveillance de la seconde fonction de surveillance d'erreurs (131x), la détermination (303) d'un second paramètre de communication du second élément (130x) de réseau, et la fourniture du second paramètre de communication à l'entité locale de traitement d'erreurs (140) ;
la vérification (305) d'une première condition d'erreur sur la base du premier paramètre de communication et d'au moins un premier paramètre de référence et, dans l'éventualité d'une première erreur, la commutation de la première fonction de surveillance d'erreurs (131a) vers le mode de réparation, où, en mode de réparation, la première fonction de surveillance d'erreurs (131a) est configurée pour commuter le premier élément (130a) de réseau vers un état prédéfini ; et
la vérification (307) d'une seconde condition d'erreur sur la base du second paramètre de communication et d'au moins un second paramètre de référence et, dans l'éventualité d'une seconde erreur, la commutation de la seconde fonction de surveillance d'erreurs (131x) vers le mode de réparation, où, en mode de réparation, la seconde fonction de surveillance d'erreurs (131x) est configurée pour commuter le second élément (130x) de réseau vers un état prédéfini,
l'entité locale de traitement d'erreurs (140) étant configurée en outre pour signaler une erreur à une entité globale de traitement d'erreurs (160) du réseau de communications (200), si le premier élément (130a) de réseau et/ou le second élément (130x) de réseau ne peuvent pas être commutés vers l'état prédéfini.
